# FASCICULE DE BREVET EUROPEEN

(11) **EP 3 174 653 B1**
(45) Date de publication et mention de la délivrance du brevet: **27.12.2023**
(21) Numéro de dépôt: 15742023.3
(22) Date de dépôt: 24.07.2015
(51) Int. Cl.: B22F 3/105, B29C 67/00, B29D 30/06, B22F 5/00, B33Y 80/00, B33Y 10/00, B29C 64/153, B22F 10/28, B22F 10/47

(54) **PROCÉDÉ DE FABRICATION ADDITIVE À BASE DE POUDRE D'UNE PIÈCE, NOTAMMENT D'UNE LAMELLE DE GARNITURE POUR MOULE DE PNEUMATIQUES, ET D'UN ÉLÉMENT DE RENFORT ASSOCIÉ**
VERFAHREN ZUR PULVERBASIERTEN GENERATIVEN FERTIGUNG EINER KOMPONENTE, INSBESONDERE EINER FORMENDEN FORMUNGSREIFENFORMAUSKLEIDUNG, MIT EINEM ZUGEHÖRIGEN VERSTÄRKUNGSELEMENT
METHOD FOR THE POWDER-BASED ADDITIVE MANUFACTURE OF A COMPONENT, NOTABLY A SYPE-MOULDING TYRE-MOULD LINER, WITH AN ASOCIATED REINFORCING ELEMENT

(30) Priorité: 28.07.2014 FR 1457260
(43) Date de publication de la demande: 07.06.2017
(73) Titulaire: Compagnie Générale des Etablissements Michelin, 63000 Clermont-Ferrand (FR)
(72) Inventeur: PAYS, Pierre, 63040 Clermont-Ferrand Cedex 09 (FR); NIGAIZE, Bruno, 63040 Clermont-Ferrand Cedex 09 (FR)
(74) Mandataire: M.F.P. Michelin
(86) Numéro de dépôt international: PCT/EP2015/067043
(87) Numéro de publication internationale: WO 2016/016138

(56) Documents cités:
- EP-A1- 2 022 622
- WO-A1-2012/001324
- FR-A1- 2 961 741
- US-A1- 2004 031 780
- US-A1- 2012 178 845

## Description

La présente invention concerne un procédé de fabrication additive à base de poudre par frittage ou par fusion de grains de ladite poudre à l'aide d'un faisceau énergétique. Par « faisceau énergétique », on entend un rayonnement électromagnétique (par exemple un faisceau laser) ou un faisceau de particules (par exemple un faisceau d'électrons).

Une application particulièrement intéressante de l'invention concerne la fabrication d'éléments de garniture, tels que des lamelles, d'un moule de cuisson ou vulcanisation du type à secteurs pour pneumatiques de véhicules.

Ce type de moule comprend principalement deux coquilles assurant chacune le moulage d'un des flancs latéraux du pneumatique, une pluralité de secteurs assurant le moulage de la bande de roulement dudit pneumatique et mobiles radialement entre une position d'ouverture et une position de fermeture du moule. Les coquilles et les secteurs définissent un espace intérieur destiné à être mis en contact avec l'ébauche du pneumatique non vulcanisée. Pour former les sculptures de la bande de roulement, des lamelles sont fixées sur les secteurs du moule et s'étendent en saillie dans cet espace intérieur. Pour plus de détails sur un moule comprenant de telles lamelles, on pourra par exemple se référer aux documents EP-B1-1 758 743 et US-A1-2002/0139164.

L'intérêt de la fabrication par fusion sélective de couches de poudre superposées, plus communément nommé frittage, réside principalement dans le fait que la forme de ces lamelles peut être modélisée par ordinateur et que les lamelles peuvent ensuite être fabriquées sur la base de cette modélisation par pilotage du faisceau énergétique par l'ordinateur. En outre, cette technique est bien adaptée à la fabrication d'éléments de petites dimensions et de formes complexes, tels que les lamelles de garniture de moule, qui sont difficiles à fabriquer avec d'autres procédés.

Lorsque la fusion sélective est réalisée par un faisceau laser, on parle de frittage laser. La technique de frittage laser consiste à fabriquer la lamelle couche après couche, en empilant les couches de poudre consolidées et fusionnées les unes sur les autres par le faisceau laser selon une direction d'empilage. On entend par « poudre », une poudre ou un mélange de poudres. La poudre peut par exemple être métallique ou minérale, par exemple céramique.

Classiquement, pour assurer la préparation du lit de poudre préalablement à l'opération de frittage ou de la fusion, il est utilisé un dispositif de mise en couche. Un tel dispositif comprend principalement un cylindre ou rouleau apte à répartir sur un plateau de fabrication la poudre en une couche. Pour plus de détails, on pourra par exemple se référer à la demande de brevet FR-A1-2 974 316.

La première couche est déposée puis soudée directement sur le plateau de fabrication. Les autres couches sont ensuite formées successivement de manière à obtenir un empilage à partir de la première couche.

Une fois la lamelle formée, il est nécessaire de la désolidariser du plateau de fabrication, par exemple par découpe par électro-érosion par fil. Cette désolidarisation peut entraîner une déformation de la lamelle dans la mesure où les contraintes mécaniques existantes entre les différentes couches empilées peuvent être modifiées.

Pour remédier à cet inconvénient, la demande de brevet FR-A1-2 961 741 préconise de prévoir des surépaisseurs venues de matière avec la lamelle et formant des renforts. Cette solution est efficace pour garantir que les lamelles conservent leur forme après désolidarisation du plateau de fabrication sur lequel elles ont été fabriquées.

Toutefois, même avec de tels renforts, sous l'effet des efforts appliqués par le dispositif de mise en couche à chaque passage sur les couches de poudre, il peut se produire des vibrations, des déformations et/ou des détériorations des lamelles en cours de fabrication pouvant provoquer l'apparition de concentrations de contraintes et de microfissures. Ceci est notamment le cas pour les lamelles présentant une section relativement faible.

Par ailleurs, des concentrations de contraintes internes sont générées dans les lamelles par diffusion de chaleur lors des étapes de fusion. Ceci génère également des déformations et/ou des détériorations des lamelles en cours de fabrication.

La demande de brevet US-A1-2013/112366 décrit des éléments de maintien fabriqués à coté d'éléments ayant la forme d'une lamelle.

La présente invention vise à remédier à ces inconvénients.

Plus particulièrement, la présente invention vise à prévoir un procédé de fabrication additive d'au moins une pièce par frittage ou fusion de poudre à l'aide d'au moins un faisceau énergétique qui permet de limiter le risque de vibrations, de déformations et/ou de détériorations des lamelles lors de la fabrication.

Dans un mode de mise en oeuvre, le procédé de fabrication additive d'au moins une pièce par frittage ou fusion de poudre à l'aide d'au moins un faisceau énergétique, ladite pièce comprenant au moins deux faces principales opposées et au moins deux extrémités, comprend les étapes suivantes:
- a) fabrication par dépose et fusion sélective de couches de poudre empilées d'au moins un élément intermédiaire comprenant la pièce et au moins un élément de renfort local présentant une forme tubulaire fendue et entourant une des faces d'extrémité latérales de la pièce et venant en regard de chacune des faces frontales de ladite pièce adjacentes à ladite face d'extrémité, une partie de la pièce s' étendant à travers de la fente de l'élément de renfort et à l'intérieur dudit élément de renfort, l'autre partie de la pièce étant située à l'extérieur dudit élément de renfort, ledit élément de renfort s'étendant selon une direction sensiblement parallèle à la direction d'empilage des couches, et
- b) séparation de la pièce et de l'élément de renfort local, de la poudre non fusionnée remplissant l'espace existant entre une surface intérieure dudit élément de renfort local avant l'étape de séparation.

La prévision d'au moins un élément de renfort local associé à la pièce pour former un élément intermédiaire permet de maintenir en position la pièce en cours de fabrication et de la rendre plus rigide. On limite ainsi le risque de vibrations et de déformations de la pièce, notamment par flexion, lors du passage du dispositif de mise en couche sur chacune des couches de poudre fusionnées au préalable, et également lors des étapes de fusion des couches successives.

Dans un mode de mise en oeuvre préféré, les couches de poudre fusionnées de la pièce et dudit élément de renfort local sont rendues solidaires les unes des autres lors de l'étape de fabrication. Ceci favorise encore un bon maintien de la pièce lors de la fabrication.

De préférence, ledit élément de renfort local est configuré de sorte à renforcer la pièce au moins selon une direction sensiblement perpendiculaire à la direction d'empilage des couches. Cette configuration est avantageuse dans la mesure où le risque de déformations de la lamelle sous l'effet des efforts appliqués par le dispositif de mise en couche est encore réduit. Ceci permet également de limiter les déformations liées aux concentrations internes générées dans la pièce par diffusion de chaleur lors des étapes de fusion.

De la poudre non fusionnée remplit un espace existant entre une surface intérieure dudit élément de renfort local et la pièce avant l'étape de séparation. La poudre non frittée est ainsi compactée entre l'intérieur de l'élément de renfort local et la pièce, ce qui augmente encore la rigidité de l'élément intermédiaire.

De préférence, selon une fusion modélisée d'une couche de poudre de l'élément de renfort local et d'une couche de poudre de la pièce, un jeu est prévu entre chaque face d'extrémité de la couche de l'élément de renfort et la face frontale de la couche de la pièce qui est en regard de ladite face d'extrémité. Le jeu est compris entre 0,01 mm et 1 mm, et de préférence compris entre 0,05 et 0,2 mm, et de préférence inférieur ou égal à 0,1 mm.

Ledit élément de renfort local peut s'étendre sur la totalité de la hauteur de la pièce.

Dans un mode de mise en oeuvre, une pluralité d'éléments intermédiaires est fabriquée simultanément au moins suivant une matrice de colonnes et de lignes. Avantageusement, les éléments de renfort d'au moins une colonne ou d'au moins une ligne sont réalisés d'un seul tenant. On accroît ainsi l'effet de rigidification des éléments de renfort de la colonne considérée et on facilite la manutention de ces éléments intermédiaires assemblés.

L'invention concerne également un élément intermédiaire obtenu par mise en oeuvre du procédé tel que défini précédemment.

La présente invention sera mieux comprise à la lecture de la description détaillée de modes de réalisation pris à titre d'exemples nullement limitatifs et illustrés par les dessins annexés sur lesquels :
- la figure 1 est vue schématique en perspective illustrant partiellement un procédé de fabrication de lamelles selon un premier exemple de mise en oeuvre,
- la figure 2 est une vue en perspective d'un élément intermédiaire obtenu lors du procédé de fabrication de la figure 1 et qui comprend une des lamelles et un élément de renfort local,
- la figure 3 est vue schématique de dessus illustrant des couches de l'élément intermédiaire de la figure 2 après fusion sélective modélisée par ordinateur,
- la figure 4 est vue schématique de dessus illustrant des couches de l'élément intermédiaire de la figure 2 après fusion sélective obtenue par laser,
- la figure 5 est vue schématique en perspective illustrant partiellement un procédé de fabrication de lamelles selon un deuxième exemple de mise en oeuvre,
- la figure 6 est vue schématique de dessus illustrant un élément intermédiaire obtenu lors d'un troisième exemple de mise en oeuvre du procédé de fabrication, et
- les figures 7 à 9 sont des vues en perspective d'un élément intermédiaire obtenu lors de quatrième, cinquième et sixième exemples de mise en oeuvre du procédé de fabrication.

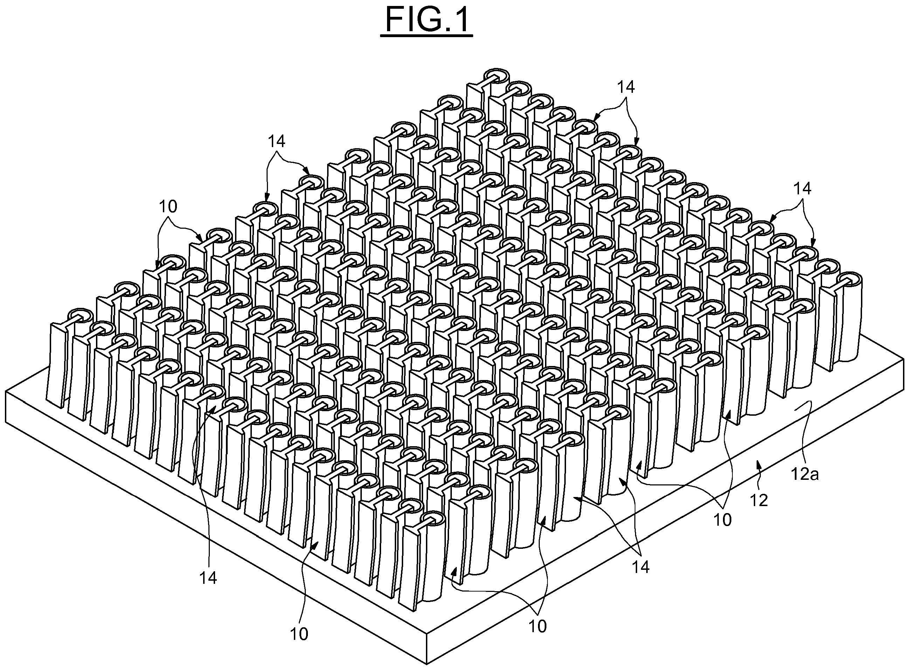

Sur la figure 1, on a représenté un agencement de lamelles 10 identiques qui sont destinées à un moule de vulcanisation pour pneumatiques et formées sur un plateau de fabrication 12 représenté dans une position supposée horizontale. Chaque lamelle 10 est associée à un élément de renfort 14 local entourant uniquement une des extrémités de ladite lamelle. Les éléments de renfort 14 sont identiques entre eux. Le plateau 12 comprend une surface supérieure formant une surface de travail 12a sur laquelle sont formées les lamelles 10 et les éléments de renfort 14. Les lamelles 10 et les éléments de renfort 14 sont respectivement identiques entre eux.

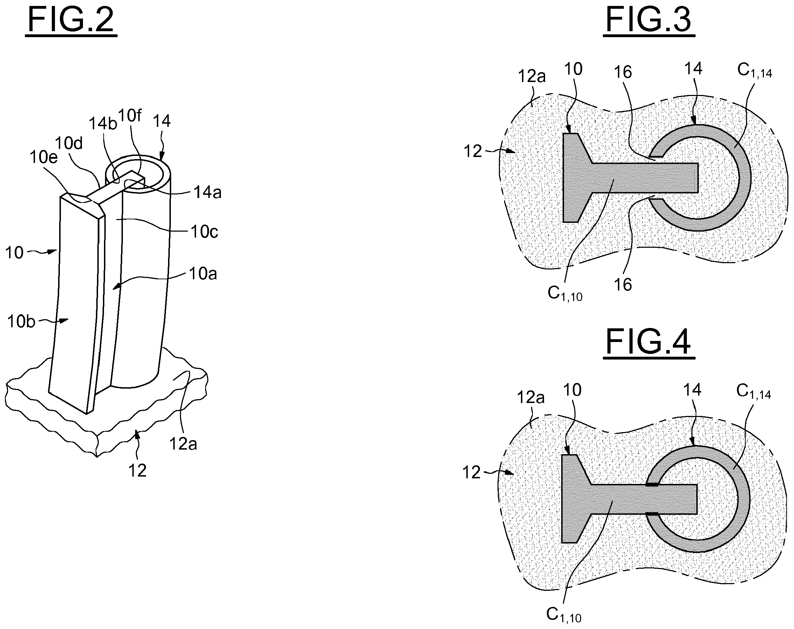

Comme illustré plus visiblement à la figure 2, chaque lamelle 10 présente une forme générale rectangulaire. La longueur de la lamelle s'étend sensiblement perpendiculairement par rapport à la surface de travail 12a du plateau de fabrication, i.e. ici sensiblement verticalement. Les lamelles 10 sont orientées ou s'étendent sensiblement verticalement. En d'autres termes, la longueur de la lamelle constitue sa hauteur.

La lamelle 10 présente ici une forme courbe. Dans l'exemple de réalisation illustré, chaque lamelle 10 comprend un corps 10a principal et une tête 10b monobloc avec ledit corps. Le corps 10a comprend deux faces frontales principales 10c, 10d opposées et deux faces d'extrémité 10e, 10f latérales opposées délimitant lesdites faces frontales. Les faces frontales principales 10c, 10d délimitent l'épaisseur du corps 10a de la lamelle. Dans l'exemple de réalisation illustré, les faces principales 10c, 10d sont planes. En variantes, ces faces pourraient présenter une autre forme, par exemple ondulée. La tête 10b prolonge la face d'extrémité 10e du corps et s'étend parallèlement à la longueur du corps. La tête 10b présente ici une forme sensiblement cylindrique à section triangulaire. En variante, la section de la tête pourrait avoir toute autre forme par exemple rectangulaire, carré, circulaire, etc., ou encore en V ou en U. La lamelle 10 est apte à permettre le moulage d'une sculpture de type goutte d'eau dans la bande de roulement du pneumatique.

Chaque élément de renfort 14 entoure la face d'extrémité 10f de la lamelle associée et vient en regard des faces frontales 10c, 10d. Chaque élément de renfort 14 comprend deux faces d'extrémité 14a, 14b venant en regard des faces frontales 10c, 10d de la lamelle. L'élément de renfort 14 présente une forme tubulaire fendue. Une partie de la lamelle 10 s'étend à l'intérieur de l'élément de renfort 14 au travers de la fente délimitée par les faces d'extrémité 14a et 14b, l'autre partie de la lamelle étant située en dehors dudit élément de renfort. Chaque élément de renfort 14 s'étend sensiblement perpendiculairement par rapport à la surface de travail 12a du plateau de fabrication. Chaque élément de renfort 14 présente ici une longueur sensiblement égale à celle de la lamelle 10 associée.

Pour la fabrication de la pluralité de lamelles 10, on procède de la manière suivante. Dans une première étape, on dépose une première couche de poudre sur la surface de travail 12a du plateau de fabrication. Après dépose, la première couche s'étend sensiblement horizontalement sur la surface de travail 12a. La poudre peut par exemple être métallique ou minérale, par exemple céramique.

Dans une seconde étape, une source énergétique (non représentée), par exemple du type laser, émet un faisceau laser dont l'orientation est contrôlée par des miroirs galvanométriques (non représentés). Une lentille optique (non représentée) permet de focaliser le faisceau laser afin de chauffer la couche de poudre selon un motif correspondant à la section de la lamelle 10 à fabriquer et à la section de l'élément de renfort 14 associé, et ainsi réaliser de manière sélective la fusion de la poudre. Cette fusion sélective est réalisée dans chaque zone de la surface de travail 12a du plateau de fabrication sur laquelle doit être fabriquée une lamelle 10 et l'élément de renfort 14 associé.

Comme cela est illustré à la figure 3, le pilotage du faisceau laser est modélisé par ordinateur de sorte à obtenir théoriquement sur la surface de travail 12a du plateau de fabrication une première couche C_{1,10} de poudre fusionnée et une première couche C_{1,14} de poudre fusionnée respectivement pour la formation la lamelle 10 et de l'élément de renfort 14 associé. Sur cette figure, la poudre déposée au préalable et non frittée est illustrée par des points. Tel que modélisé, un jeu 16 est prévu entre chaque face d'extrémité de la couche C_{1,14} de poudre fusionnée de l'élément de renfort et la face frontale de la couche C_{1,10} de poudre fusionnée de la lamelle. Ce jeu est compris entre 0,01 mm et 1 mm, et avantageusement compris entre 0,05 et 0,2 mm, et de préférence inférieur ou égal à 0,1 mm.

Dans la pratique, avec un jeu 16 théorique inférieur ou égal à 0,1 mm, sous l'effet du frittage des premières couches C_{1,10} et C_{1,14} de poudre fusionnées, la poudre déposée présente entre chaque face d'extrémité de la couche C_{1,10} et la face frontale de la couche C_{1,14} est tout ou partie fusionnée par diffusion de la chaleur rendant solidaires lesdites couches de la lamelle 10 et de l'élément de renfort 14 en cours de formation. L'accroche existant entre ces couches est illustrée schématiquement à la figure 4. Cette accroche crée un lien entre la lamelle 10 et l'élément de renfort 14 qui peut être rompu manuellement, comme précisé par la suite. On parle de couche de base des couches de poudre fusionnées pour la couche inférieure C_{1,10}, C_{1,14}, sur laquelle repose respectivement la lamelle 10 et l'élément de renfort 14.

Lors d'une troisième étape, après l'étape de traitement par laser, une deuxième couche est déposée sur la première couche de poudre qui est en partie fusionnée. Ensuite, la fusion sélective de la deuxième couche est réalisée comme précédemment. Ces étapes sont à nouveau répétées pour former par empilage de couches fusionnées les lamelles 10 et les éléments de renfort 14 associés. Les couches fusionnées de chaque lamelle 10 et de chaque renfort 14 s'étendent sensiblement horizontalement et sont empilées les unes sur les autres selon une direction d'empilage sensiblement verticale. Chaque élément de renfort 14 permet de renforcer la lamelle 10 associée au moins selon une direction sensiblement perpendiculaire à la direction d'empilage des couches.

Ainsi, il est fabriqué une pluralité d'éléments intermédiaires comprenant chacun la lamelle 10 et l'élément de renfort 14 local associé. Dans l'exemple de réalisation illustré, pour chaque élément intermédiaire fabriqué, la lamelle 10 et l'élément de renfort 14 sont réalisés d'un seul tenant. L'élément de renfort 14 qui entoure la face d'extrémité 10f de la lamelle et vient en appui de part et d'autre contre les faces principales 10c, 10d de celle-ci permet d'assurer le maintien en position de ladite lamelle en cours de fabrication. Ceci limite encore le risque de déformations, notamment par flexion lors du passage du dispositif de mise en couche et par diffusion de la chaleur lors des étapes de fusion, pouvant provoquer l'apparition de phénomènes de concentrations de contraintes et de micro fissures. En outre, la présence de la poudre non frittée, coincée et compactée dans l'espace existant entre la lamelle 10 et l'alésage de l'élément de renfort 14 formant surface intérieure favorise encore un bon maintien de la lamelle. L'élément de renfort 14 vient uniquement en appui contre les faces principales 10c, 10d de la lamelle 10 et non contre la face d'extrémité 10f.

Comme illustré à la figure 1, après fabrication, les éléments intermédiaires constitués chacun par une lamelle 10 et l'élément de renfort 14 associé sont agencés sur le plateau 12 suivant une matrice de colonnes et de lignes parallèles. Les éléments intermédiaires peuvent ensuite être désolidarisés du plateau 12 de fabrication, par exemple par découpe par électro-érosion par fil. Enfin, lors d'une dernière étape, les lamelles 10 et l'élément de renfort 14 de chaque élément intermédiaire sont désolidarisés l'un de l'autre par tirage, pouvant par exemple être manuel, de sorte à ne conserver que les lamelles. L'effort de traction exercé pour assurer cette désolidarisation est orienté perpendiculairement à la direction d'empilage des couches de poudre. En outre, la partie de la lamelle 12 en saillie à l'extérieur de l'élément de renfort 14 facilite la préhension pour réaliser cette désolidarisation.

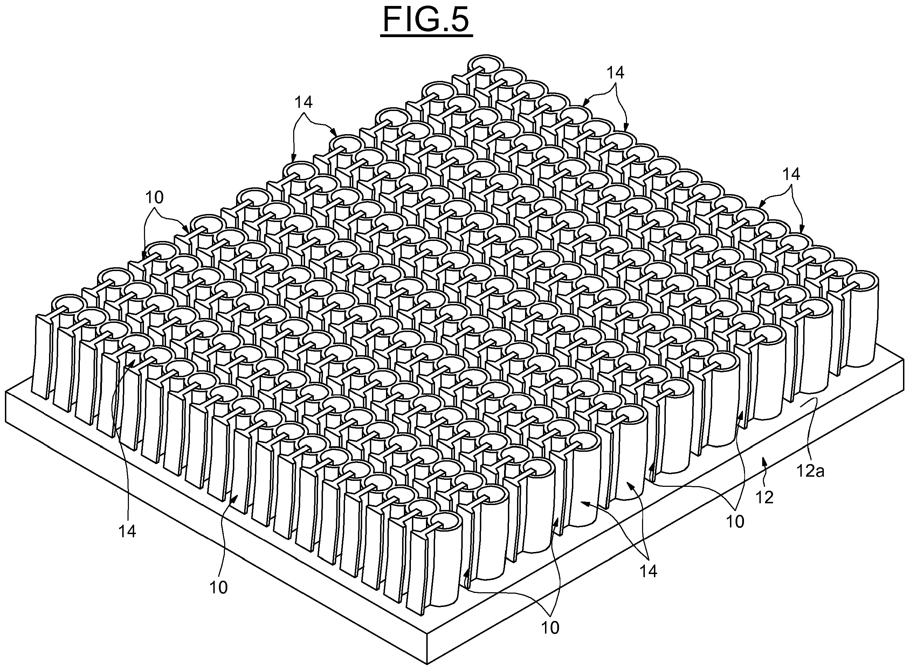

Dans l'exemple de réalisation illustré, les éléments intermédiaires de chaque colonne sont fabriqués de sorte à être alignées et espacées les uns relativement aux autres. En variante, il est possible de prévoir la fabrication des éléments intermédiaires de sorte que les éléments de renfort 14 de chaque colonne sont réalisés d'un seul tenant, i.e. monoblocs, comme illustré sur la variante de réalisation de la figure 5 sur laquelle les éléments identiques portent les mêmes références. Ceci permet d'accroître encore la rigidité de l'ensemble ainsi obtenu et de limiter le risque de déformations des lamelles 10 de cet ensemble. Ceci facilite également la manutention de l'ensemble après découpe. En outre, après découpe des éléments intermédiaires du plateau 12 de fabrication, les lamelles 10 d'une même colonne peuvent être ensuite détachées de leurs éléments de renfort 14 en une seule opération.

Dans les exemples de réalisation précédents, les lamelles 10 présentent une forme générale rectangulaire et sont conçus pour permettre le moulage d'une sculpture de type goutte d'eau. La section de la tête 10b de chaque lamelle étant relativement importante, celle-ci présente une rigidité suffisante ne nécessitant pas la prévision d'un renfort local dans cette zone.

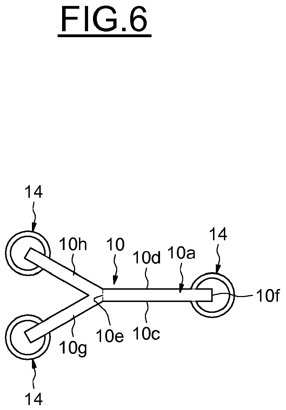

En variante, il est possible de fabriquer des lamelles 10 présentant d'autres formes, par exemple dépourvues de têtes 10b. Dans ce cas, il peut être possible de prévoir un élément de renfort à chaque face d'extrémité du corps de la lamelle. Dans une autre variante illustrée à la figure 6, il est possible de prévoir une lamelle 10 comprenant deux branches 10g, 10h s'étendant à partir de la face d'extrémité 10e. Un élément de renfort 14 est prévu ici autour de la face d'extrémité libre de chaque branche 10g, 10h et vient en regard des faces frontales de ladite branche adjacentes à ladite face d'extrémité.

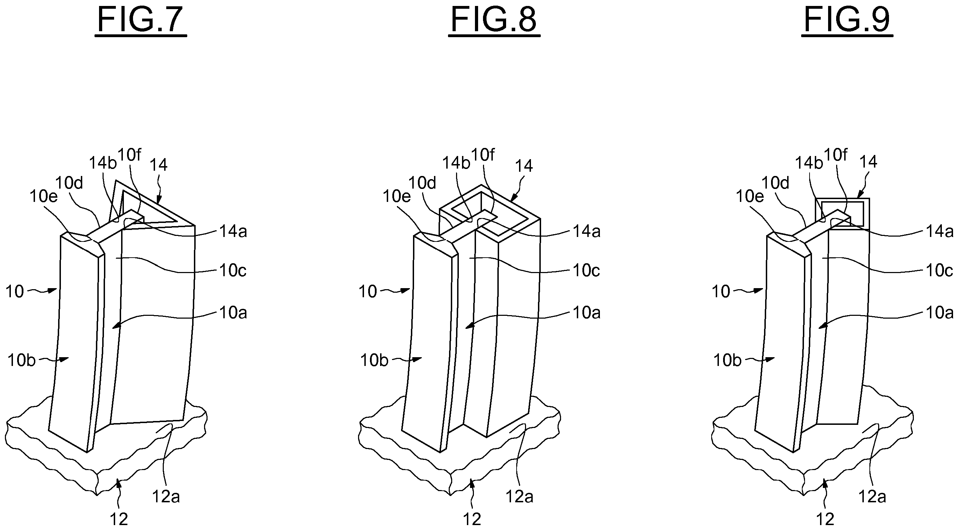

Dans les exemples de réalisation illustrés, chaque élément de renfort 14 présente une forme tubulaire fendue à section circulaire en C. Alternativement, il est possible de prévoir des éléments de renfort 14 présentant une forme tubulaire fendue à section polygonale telle que triangulaire, rectangulaire ou carré comme cela est illustré respectivement sur les variantes de réalisation des figures 7 à 9. En variante, il est encore possible de prévoir des éléments de renfort présentant une forme tubulaire fendue à section polygonale telle qu'hexagonale, octogonale, etc., ou encore des éléments de renfort à section elliptique. Une partie de la lamelle à rigidifier s'étend à travers la fente et à l'intérieur de l'élément de renfort 14, l'autre partie de la lamelle étant située à l'extérieur dudit élément de renfort.

Dans les exemples de réalisation illustrés, le corps 10a principal de la lamelle s'étend sensiblement verticalement. En variante, le corps de la lamelle pourrait présenter un profil courbe. Dans ce cas, la fente de l'élément de renfort présente un profil similaire de sorte à suivre la courbure de la lamelle.

Dans les exemples de réalisation illustrés aux figures 1 à 6, chaque élément de renfort s'étend sur la totalité de la longueur la lamelle à rigidifier. En variante, il est possible de prévoir des éléments de renfort s'étendant chacun sur une partie de la longueur de la lamelle associée. Ceci peut par exemple être le cas lorsque la lamelle possède une zone à section fine et une zone à section épaisse. Dans ce cas, l'élément de renfort peut être prévu uniquement autour de la zone de la lamelle présentant une section fine.

L'invention a été décrite sur la base d'une fabrication de lamelles 10 de type verticale, la longueur de chaque lamelle s'étendant sensiblement verticalement par rapport à la surface de travail 12a du plateau. En variante, il est possible de prévoir une fabrication de type horizontale dans laquelle la longueur de la lamelle est sensiblement parallèle au plateau de fabrication et perpendiculaire à la direction d'empilage. Dans ce cas, deux éléments de renfort local peuvent être prévus pour entourer chacune des extrémités longitudinales de la lamelle. Les éléments de renfort local peuvent alors avoir essentiellement un rôle de support de la lamelle lorsque l'élément intermédiaire, qui est formé par celle-ci et les éléments de renfort, est désolidarisé du plateau de fabrication.

L'invention a été décrite sur la base d'une fabrication par frittage laser d'une lamelle pour moule de vulcanisation de pneumatiques. L'invention peut également être appliquée à un autre élément de garniture du moule destiné à être rapporté sur un bloc support du moule, ou plus généralement à d'autres types de pièces de petites dimensions utilisées dans des applications différentes.

## Revendications

1. Procédé de fabrication additive d'au moins une pièce par frittage ou fusion de poudre à l'aide d'au moins un faisceau énergétique, ladite pièce comprenant au moins deux faces frontales opposées et au moins deux faces d'extrémité latérales, le procédé comprenant les étapes suivantes:
- a) fabrication par dépose et fusion sélective de couches de poudre empilées d'au moins un élément intermédiaire comprenant la pièce et au moins un élément de renfort local présentant une forme tubulaire fendue et entourant une des faces d'extrémité latérales de la pièce et venant en regard de chacune des faces frontales de ladite pièce adjacentes à ladite face d'extrémité, une partie de la pièce s'étendant à travers la fente de l'élément de renfort et à l'intérieur dudit élément de renfort, l'autre partie de la pièce étant située à l'extérieur dudit élément de renfort, ledit élément de renfort s'étendant selon une direction sensiblement parallèle à la direction d'empilage des couches, et
- b) séparation de la pièce et de l'élément de renfort local, de la poudre non fusionnée remplissant l'espace existant entre une surface intérieure dudit élément de renfort local et la partie de la pièce s'étendant à l'intérieur dudit élément de renfort local avant l'étape de séparation.

2. Procédé selon la revendication 1, dans lequel les couches de poudre fusionnée de la pièce et dudit élément de renfort local sont rendues solidaires les unes des autres lors de l'étape de fabrication.

3. Procédé selon la revendication 1 ou 2, dans lequel ledit élément de renfort local est configuré de sorte à renforcer la pièce au moins selon une direction sensiblement perpendiculaire à la direction d'empilage des couches.

4. Procédé selon l'une quelconque des revendications précédentes, dans lequel selon une fusion modélisée d'une couche de poudre de l'élément de renfort local et d'une couche de poudre de la pièce, un jeu est prévu entre chaque face d'extrémité de la couche de l'élément de renfort et la face frontale de la couche de la pièce qui est en regard de ladite face d'extrémité, ledit jeu étant compris entre 0,01 mm et 1 mm, et de préférence compris entre 0,05 et 0,2 mm, et de préférence inférieur ou égal à 0,1 mm.

5. Procédé selon l'une quelconque des revendications précédentes, dans lequel ledit élément de renfort local s'étend sur la totalité de la hauteur de la pièce.

6. Procédé selon l'une quelconque des revendications précédentes, dans lequel une pluralité d'éléments intermédiaires est fabriquée simultanément au moins suivant une matrice de colonnes et de lignes.

7. Procédé selon la revendication 6, dans lequel les éléments de renfort d'au moins une colonne ou d'au moins une ligne sont réalisés d'un seul tenant.

8. Elément intermédiaire obtenu par mise en oeuvre du procédé selon l'une quelconque des revendications précédentes.

## Patentansprüche

1. Verfahren zur generativen Fertigung mindestens einer Komponente durch Sintern oder Schmelzen von Pulver mit Hilfe mindestens eines Energiestrahls, wobei die Komponente mindestens zwei sich gegenüberliegende Frontflächen und mindestens zwei seitliche Endflächen beinhaltet, wobei das Verfahren die folgenden Schritte beinhaltet:
- a) Fertigen, durch Aufbringen und selektives Schmelzen von gestapelten Pulverschichten, mindestens eines Zwischenelements, das die Komponente und mindestens ein lokales Verstärkungselement beinhaltet, welches eine mit einem Schlitz versehene Röhrenform aufweist und eine der seitlichen Endflächen der Komponente umgibt und gegenüber jeder der Frontflächen der Komponente, die an die Endfläche angrenzen, endet, wobei sich ein Teil der Komponente durch den Schlitz des Verstärkungselements und innerhalb des Verstärkungselements erstreckt, während sich der andere Teil der Komponente außerhalb des Verstärkungselements befindet, wobei sich das Verstärkungselement gemäß einer zu der Stapelungsrichtung der Schichten im Wesentlichen parallelen Richtung erstreckt, und
- b) Trennen der Komponente und des lokalen Verstärkungselements, wobei vor dem Schritt des Trennens nicht geschmolzenes Pulver den Raum ausfüllt, der zwischen einer Innenoberfläche des lokalen Verstärkungselements und dem Teil der Komponente, der sich innerhalb des lokalen Verstärkungselements erstreckt, vorhanden ist.

2. Verfahren nach Anspruch 1, wobei die Schichten aus geschmolzenem Pulver der Komponente und des lokalen Verstärkungselements während des Fertigungsschritts miteinander verbunden werden.

3. Verfahren nach Anspruch 1 oder 2, wobei das lokale Verstärkungselement so konfiguriert ist, dass es die Komponente mindestens gemäß einer zu der Stapelungsrichtung der Schichten im Wesentlichen senkrechten Richtung verstärkt.

4. Verfahren nach einem beliebigen der vorhergehenden Ansprüche, wobei gemäß einem modellierten Schmelzen einer Pulverschicht des lokalen Verstärkungselements und einer Pulverschicht der Komponente ein Spiel zwischen jeder Endfläche der Schicht des Verstärkungselements und der Frontfläche der Schicht der Komponente, die sich gegenüber der Endfläche befindet, vorgesehen ist, wobei das Spiel zwischen 0,01 mm und 1 mm beträgt und vorzugsweise zwischen 0,05 und 0,2 mm beträgt und vorzugsweise kleiner als oder gleich 0,1 mm ist.

5. Verfahren nach einem beliebigen der vorhergehenden Ansprüche, wobei sich das lokale Verstärkungselement über die gesamte Höhe der Komponente erstreckt.

6. Verfahren nach einem beliebigen der vorhergehenden Ansprüche, wobei eine Vielzahl von Zwischenelementen mindestens gemäß einer Matrix aus Spalten und Zeilen gleichzeitig gefertigt wird.

7. Verfahren nach Anspruch 6, wobei die Verstärkungselemente mindestens einer Spalte oder mindestens einer Zeile einstückig ausgeführt werden.

8. Zwischenelement, das durch Umsetzung des Verfahrens nach einem beliebigen der vorhergehenden Ansprüche erhalten wird.

## Claims

1. Process for the additive manufacturing of at least one part by powder sintering or melting using at least one beam of energy, said part comprising at least two opposite frontal faces and at least two lateral end faces, the process comprising the following steps:
- a) manufacture, by deposition and selective melting of stacked layers of powder, of at least one intermediate element comprising the part and at least one local reinforcing element having a split tubular shape that surrounds one of the lateral end faces of the part and that face each of the frontal faces of said part adjacent to said end face, a portion of said part extending through the slit of the reinforcing element and inside said reinforcing element, the other portion of said part being located outside said reinforcing element, said reinforcing element extending in a direction substantially parallel to the stacking direction of the layers, and
- b) separation of the part and of the local reinforcing element, unfused powder filling a space that exists between an inner surface of said local reinforcing element and the portion of the part extending inside said reinforcing element before the separation step.

2. Process according to Claim 1, in which the fused powder layers of the part and of said local reinforcing element are joined to one another during the manufacturing step.

3. Process according to Claim 1 or 2, in which said local reinforcing element is configured so as to reinforce the part at least in a direction substantially perpendicular to the stacking direction of the layers.

4. Process according to any one of the preceding claims, in which according to a modelled melting of a layer of powder of the local reinforcing element and of a layer of powder of the part, a gap is provided between each end face of the layer of the reinforcing element and the frontal face of the layer of the part which is facing said end face, said gap being between 0.01 mm and 1 mm, and preferably between 0.05 and 0.2 mm, and preferably less than or equal to 0.1 mm.

5. Process according to any one of the preceding claims, in which said local reinforcing element extends over the entire height of the part.

6. Process according to any one of the preceding claims, in which a plurality of intermediate elements is manufactured simultaneously at least as a matrix of columns and rows.

7. Process according to Claim 6, in which the reinforcing elements of at least one column or of at least one row are produced as one piece.

8. Intermediate element obtained by implementation of the process according to any one of the preceding claims.
